# EUROPÄISCHE PATENTSCHRIFT

(11) **EP 2 014 149 B1**
(45) Veröffentlichungstag und Bekanntmachung des Hinweises auf die Patenterteilung: **03.03.2010**
(21) Anmeldenummer: 08158105.0
(22) Anmeldetag: 12.06.2008
(51) Int. Cl.: A01F 12/18

(54) **Abscheidetrommel für ein Mehrtrommeldreschwerk**
Removal drum for a multi-drum thresher
Tambour rotatif de séparation pour une batteuse à plusieurs cylindres

(30) Priorität: 07.07.2007 DE 102007031807
(43) Veröffentlichungstag der Anmeldung: 14.01.2009
(73) Patentinhaber: Deere & Company, Moline, IL 61265-8098 (US)
(72) Erfinder: Bischoff, Lutz, 66989 Nünschweiler (DE)
(74) Vertreter: Holst, Sönke

(56) Entgegenhaltungen:
- EP-A- 1 226 747
- DE-A1- 4 218 611
- GB-A- 919 820

## Beschreibung

Die Erfindung betrifft eine Abscheidetrommel für ein Mehrtrommeldreschwerk, umfassend eine Welle, einen mit der Welle verbundenen Mantel und mit dem Mantel verbundene, sich vom Mantel nach außen erstreckende Finger, die um den Umfang des Mantels und über seine Länge verteilt sind.

### Stand der Technik

Ein Mehrtrommeldreschwerk umfasst zumindest eine Dreschtrommel und eine Abscheidetrommel (die auch als Separiertrommel bezeichnet wird) stromab der Dreschtrommel. Die im Tangentialflussprinzip arbeitende Dreschtrommel drischt das Erntegut und scheidet mittels eines ihr zugeordneten Dreschkorbs bereits einen größeren Kornanteil aus dem Erntegut ab. Die ebenfalls im Tangentialflussprinzip arbeitende Abscheidetrommel dient im Zusammenwirken mit einem Abscheidekorb zur Abscheidung weiteren, nach dem Dreschvorgang in der Strohmatte verbliebenen Korns und umfasst in der Regel eine hohe Anzahl einzelner, relativ schmaler Finger, die das Erntegut durchkämmen, um das Korn aus der Strohmatte herauszulösen. Der Abscheidetrommel folgt in der Regel entweder ein Strohschüttler oder ein oder zwei Abscheiderotoren.

Im Stand der Technik umfassen die Abscheidetrommeln einen offenen oder geschlossenen Grundkörper (Rotor), auf denen einzelne Finger starr montiert sind, in der Regel als Schweißzusammenbau, wie beispielsweise in der DE 42 18 611 A oder DE 30 42 734 A gezeigt. Um die gewünschte Abscheidewirkung zu erhalten, ist eine hohe Anzahl einzelner Finger erforderlich, so dass die Fertigung der Abscheidetrommeln recht aufwändig ist. Weiterhin werden die Finger durch sehr große und wechselnde Kräfte beansprucht. Besonders durch Steine oder andere Fremdkörper verursachte Stöße können zu Rissen und Brüchen der Finger führen.

Aufgrund der in der Regel schlechten Zugänglichkeit der Abscheidetrommel sind die Erkennung eines Vorschadens eines Fingers und seine Reparatur problematisch. Ein gebrochener Finger kann beträchtliche Folgeschäden nach sich ziehen.

Die EP 1 226 747 A beschreibt eine zwischen dem Auslass des Schrägförderers eines Rotormähdreschers und dem Dresch- und Trennrotor angeordnete Leittrommel, die mit einer mittigen Welle verbundene, U-förmige Bleche umfasst, deren Schenkel sich nach außen erstrecken und gegenüber der Radialen geringfügig geneigt sind. Zwischen benachbarten Blechen verbleiben Zwischenräume, in die mehrere über die Längsrichtung der Leittrommel verteilte Mitnehmerelemente eingesetzt und mit den Blechen verschraubt werden. Die Mitnehmerelemente umfassen jeweils drei sich nach außen erstreckende Zähne.

### Aufgabe der Erfindung

Die der Erfindung zu Grunde liegende Aufgabe wird darin gesehen, eine Abscheidetrommel bereitzustellen, die sich durch geringen Fertigungsaufwand und verminderte Bruchanfälligkeit auszeichnet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Abscheidetrommel umfasst eine Welle und einen damit verbundenen Mantel, der sich aus einer Anzahl um den Umfang der Abscheidetrommel verteilten Befestigungsplatten zusammensetzt. Zwischen benachbarten Befestigungsplatten bleibt jeweils ein axialer Spalt, in dem ein Befestigungsbereich einer sich in axialer Richtung erstreckenden, in der Regel in sich flachen Fingerleiste angeordnet ist, welche neben dem Befestigungsbereich einen mehrere Finger umfassenden Ernteguteingriffsbereich umfasst. Die mechanische Festigkeit des Mantels ist verbessert, da zwei in Umfangsrichtung aufeinander folgende Befestigungsplatten an zwei Befestigungsstellen verbunden werden, die ebenfalls in Umfangsrichtung aufeinander folgen. Die beiden Befestigungsplatten sind demnach nicht nur am Spalt durch die Fingerleiste untereinander verbunden, sondern zusätzlich direkt miteinander verbunden. Die Befestigungsplatten weisen jeweils einen ersten und dritten Bereich auf, der sich in Umfangsrichtung erstreckt, sowie einen zweiten und vierten, nach außen erstreckenden Bereich. Die Richtungen sind nicht exakt einzuhalten, sondern es reicht aus, wenn die erwähnten Bereiche jeweils näherungsweise in die angegebenen Richtungen verlaufen oder eine in die erwähnte Richtung verlaufende Komponente umfassen. Es folgt in Umfangsrichtung jeweils der vierte Bereich auf den dritten Bereich, der auf den zweiten Bereich folgt, welcher auf den ersten Bereich folgt. Der erste Bereich einer ersten Befestigungsplatte und der dritte Bereich einer zweiten, vorlaufenden Befestigungsplatte sind untereinander durch eine Schraubverbindung gekoppelt, die vorzugsweise auch eine mit der Welle verbundene, sich radial erstreckende Stützscheibe mit einschließt. Der zweite Bereich der ersten Befestigungsplatte und der vierte Bereich der zweiten Befestigungsplatte schließen zwischen sich den Befestigungsbereich der Fingerleiste ein und sind untereinander durch eine weitere Schraubverbindung verbunden, die auch die Fingerleiste einschließt.

Auf diese Weise erhält man eine einfach und preisgünstig aufgebaute Abscheidetrommel. Die Finger besitzen eine hinreichende Elastizität, so dass sie bei Überlastung, z. B. beim Aufprall eines Steins, sich nach hinten verbiegen und einen Überlastschutz für die Abscheidetrommel und den darunter liegenden Abscheidekorb bilden. Einzelne verbogene Finger beeinträchtigen nicht die Funktion des Mähdreschers und können bei Bedarf bzw. Gelegenheit gerichtet und notfalls ausgetauscht werden. Sowohl der Schaden durch Fremdkörper als auch die Ausfallzeiten werden auf ein Minimum reduziert. Die Klemmung der Fingerleisten zwischen den benachbarten Befestigungsplatten ergibt im Fall der Überlastung eine definierte Biegelinie und eine gute Spannungsverteilung über die gesamte Einspannfläche. Materialschwächungen und Kerbwirkungen, wie sie durch eine Schweißkonstruktion verursacht werden, sind vermieden. Das vermindert das Risiko vorzeitiger Ermüdungsbrüche. Die Fingerleisten können als Verschleißteil einfach ausgetauscht werden.

In einer bevorzugten Ausführungsform erstrecken sich die Fingerleisten über die gesamte axiale Länge des Mantels, um die Anzahl zu montierender Teile gering zu halten. Bei einer anderen Ausführungsform könnten aber auch mehrere Fingerleisten innerhalb eines Spalts in axialer Richtung aufeinander folgen, um im Fall eines Schadens nur eine kürzere Fingerleiste austauschen zu müssen.

Zur Verbesserung der Erntegutbearbeitung ist vorgeschlagen, die Finger bei in Umfangsrichtung des Mantels direkt aufeinander folgenden Fingerleisten in axialer Richtung gegeneinander zu versetzen. Ein Finger verdeckt demnach genau die Lücke zwischen zwei Fingern der vorhergehenden und der nachfolgenden Fingerleiste. Um dennoch die Anzahl unterschiedlicher Bauelemente gering zu halten, ist es bevorzugt, alle Fingerleisten gleichartig herzustellen und durch den Versatz durch eine abwechselnde, seitenverkehrte (um 180° gedrehte) Montage der Fingerleisten zu bewerkstelligen.

Eine Rückwärtsneigung und/oder eine zur Spitze verjüngend zulaufende Form der Finger sorgen dafür, dass sich im Abgabebereich des Rotors das Stroh leicht von den Fingern lösen kann und sich nicht um die Abscheidetrommel wickelt.

Die den Spalt bildenden Bereiche der Befestigungsplatte erstrecken sich, wie bereits mehrfach erwähnt, nach außen. Um ihre Festigkeit zu vergrößern und weiterhin das Anbringen der Befestigungsschrauben zu erleichtern, wird vorgeschlagen, die Befestigungsplatten mit einem konvexen Bereich zu versehen, an dessen Innenseite eine in ihrer Form an den konvexen Bereich angepasste, daran anliegende Leiste mit Gewindebohrungen oder Muttern angeordnet ist. Diese Leiste bildet eine mechanische Verfestigung des konvexen Bereichs, da sie an allen seinen Seiten (und zusätzlich ggf. noch an einer mit der Welle verbundenen, sich radial erstreckenden Stützscheibe) anliegt. In die Gewindebohrungen der Leiste greifen Schrauben ein, die sich durch eine Öffnung in einer benachbarten Befestigungsplatte, eine Öffnung in der Fingerleiste und eine Öffnung im konvexen Bereich der Befestigungsplatte erstrecken und die Fingerleiste mit beiden Befestigungsplatten verbinden.

Vorzugsweise weist der Befestigungsbereich der Fingerleisten dieselbe (oder eine kleinere) Materialstärke wie der Ernteguteingriffsbereich auf. Dadurch erzielt man aufgrund der Zwischenräume zwischen den Fingern eine größere Materialfestigkeit im Befestigungsbereich als im Ernteguteingriffsbereich und bei Überlastung können die Finger nach hinten umbiegen, ohne einen Schaden am Mantel zu verursachen.

### Ausführungsbeispiele

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers mit einem Mehrtrommeldreschwerk,
- Fig. 2: eine perspektivische Ansicht der Abscheidetrommel des Mehrtrommeldreschwerks aus Figur 1,

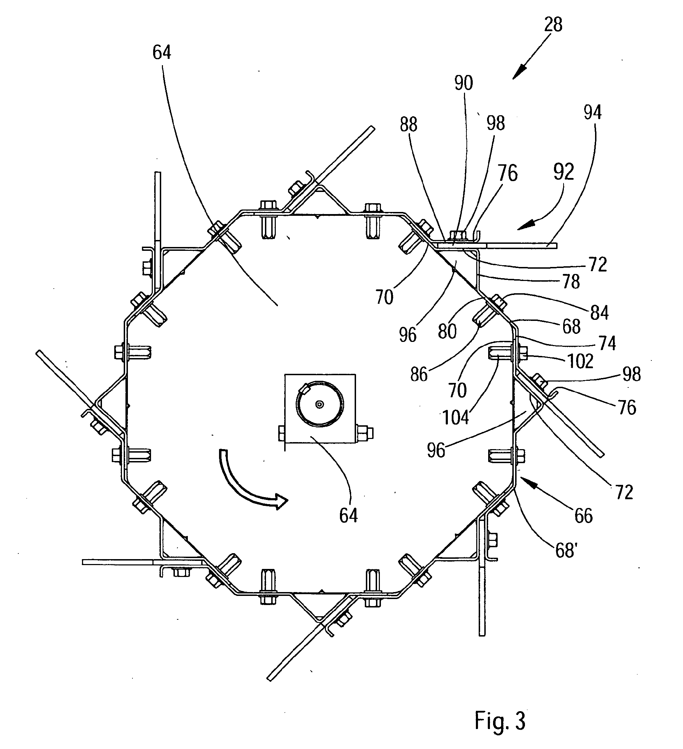

- Fig. 3: eine seitliche Ansicht der Abscheidetrommel, und

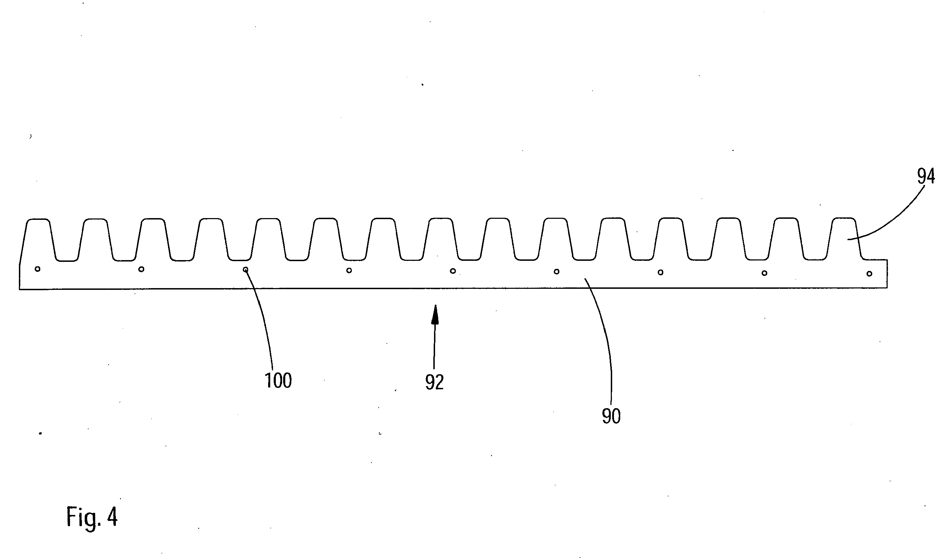

- Fig. 4.: eine Draufsicht auf eine Fingerleiste der Abscheidetrommel.

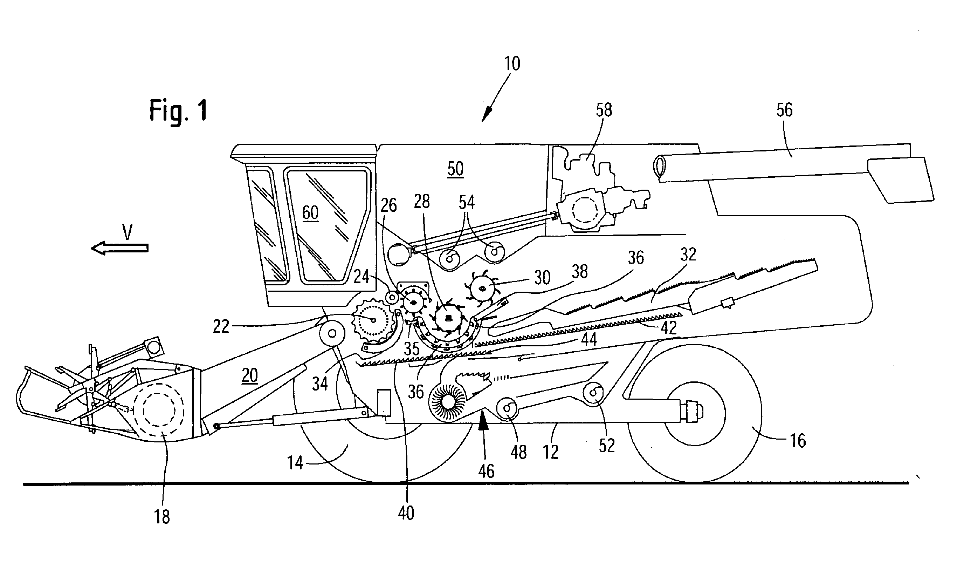

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Emtebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder anderen, dreschbaren Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, eine Abscheidetrommel 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb der Abscheidetrommel 28 ein Abscheidekorb 36 mit verstellbaren Fingerelementen befindet. Unterhalb der Wendetrommel 30 ist ein Fingerrechen 38 angeordnet.

Unterhalb des Mehrtrommeldreschwerks befindet sich ein vorderer Förderboden 40. Ein hinterer Förderboden 42 ist unterhalb des Strohschüttlers 32 angeordnet. Die Förderböden 40, 42 transportieren das Gemisch aus Korn, Kurzstroh und Spreu zu einer Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

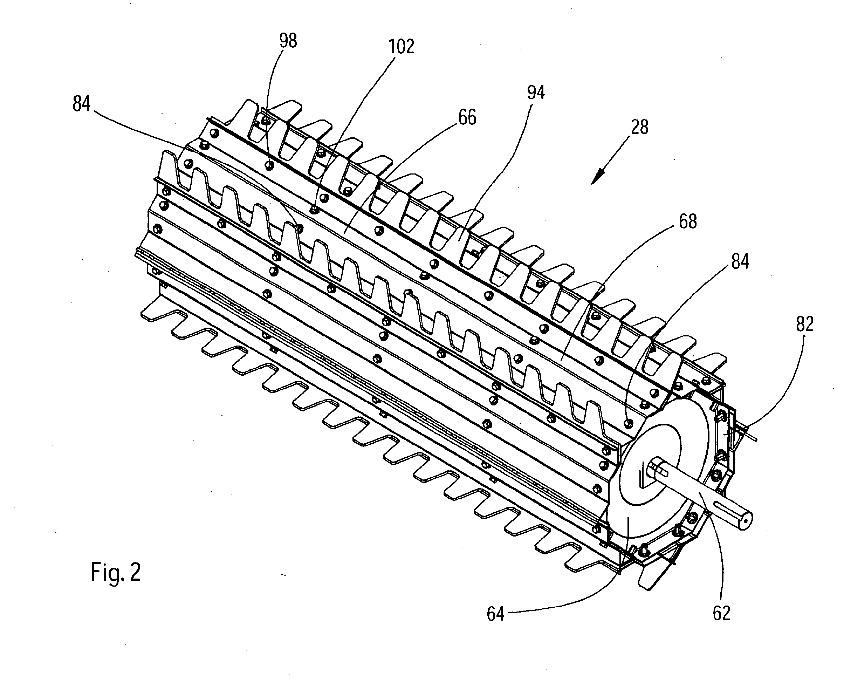

In der Figur 2 ist eine perspektivische Ansicht der Abscheidetrommel 28 dargestellt. Sie umfasst eine mittige Welle 62, die sich in axialer Richtung über die gesamte Länge der Abscheidetrommel 28 erstreckt. An der Welle sind durch Nut-Keil-Verbindungen insgesamt fünf Stützscheiben 64 befestigt, von denen in der Figur 2 nur die ganz rechts angeordnete Stützscheibe 64 erkennbar ist. Eine weitere Stützscheibe 64 befindet sich am links eingezeichneten Ende der Abscheidetrommel 28, während die verbleibenden drei Stützscheiben 64 in jeweils gleichen Abständen zwischen den beiden erwähnten Stützscheiben 64 angeordnet sind. Die Stützscheiben 64 sind mit acht geraden äußeren Kanten ausgestattet, die in umgebogene, sich in axialer Richtung erstreckende Flanschbereiche 82 übergehen.

Am Außenumfang der Stützscheiben 64 befindet sich ein Mantel 66, der insgesamt acht um den Umfang der Abscheidetrommel 28 verteilte Befestigungsplatten 68 umfasst. Die Befestigungsplatten 68 weisen jeweils einen ersten Bereich 70, der sich parallel zur benachbarten Kante der Stützscheibe 64 und somit in Umfangsrichtung des Mantels 66 erstreckt, einen zweiten Bereich 72, der sich vom Ende des ersten Bereichs 70 um 45° abgewinkelt schräg nach außen erstreckt, einen dritten Bereich 74, der sich parallel zur der dem ersten Bereich 70 benachbarten Kante folgenden Kante der Stützscheibe 64 und somit in Umfangsrichtung des Mantels 66 erstreckt, und einen vierten Bereich 76 auf, der sich vom Ende des dritten Bereichs 74 um 45° abgewinkelt schräg nach außen erstreckt. Zwischen dem zweiten Bereich 72 und dem dritten Bereich 74 befinden sich noch ein fünfter Bereich 78, der gegenüber dem zweiten Bereich 72 um 90° nach innen abgewinkelt ist, und ein sich daran anschließender sechster Bereich 80, der sich parallel zur der dem ersten Bereich 70 benachbarten Kante der Stützscheibe 64 erstreckt und an den sich der dritte Bereich unter einem Winkel von 45° nach innen abgebogen anschließt. Alle acht Befestigungsplatten 68 sind identisch und erstrecken sich über die gesamte Länge der Abscheidetrommel 28.

Die sechsten Bereiche 80 sind durch Schrauben 84, die sich durch Löcher im sechsten Bereich 80 und im Flanschbereich 82 der Stützscheibe 64 erstrecken und mit an der Innenseite der Flanschbereiche 82 angeordneten Muttern 86 zusammenwirken, mit den Stützscheiben 64 verbunden. Während die Anbringung der Muttern 86 an den nach außen gewandten Flanschbereichen 82 der äußeren Stützscheiben 64 unproblematisch ist, werden zumindest an den dazwischen liegenden, inneren Stützscheiben 64 so genannte Käfigmuttern verwendet, die mechanisch mit den inneren Stützscheiben 64 verbunden sind. Im dargestellten Beispiel sind auch die äußeren Stützscheiben 64 mit Käfigmuttem ausgestattet. Es wäre auch denkbar, die Muttern 86 auf beliebige andere Weise mit den Stützscheiben 64 (zumindest den inneren Stützscheiben 64) drehfest zu verbinden, beispielsweise durch Anschweißen oder Anlöten, oder selbstschneidende Blechschrauben als Schrauben 84 zu verwenden.

Jeweils ein vierter Abschnitt 76 einer ersten Befestigungsplatte 68 und ein zweiter Abschnitt 72 einer der ersten Befestigungsplatte 68 in Drehrichtung der Abscheidetrommel 64 unmittelbar nachfolgenden Befestigungsplatte 68' erstrecken sich parallel zueinander und lassen zwischen sich einen Spalt 88 frei, in dem ein flacher Befestigungsbereich 90 einer flachen Fingerleiste 92 angeordnet ist. Die Fingerleiste 92 umfasst eine Anzahl in axialer Richtung aufeinander folgender Finger 94, die sich nach außen hin verjüngen und einen Ernteguteingriffsbereich bilden. Die Fingerleiste 92 ist aufgrund der Positionierung des zweiten Abschnitts 72 und des vierten Abschnitts 76 näherungsweise tangential zum Mantel 66 orientiert und entgegen der Drehrichtung der Abscheidetrommel 28 nach hinten geneigt angeordnet.

Der zweite Bereich 72 und der unmittelbar darauf folgende fünfte Bereich 78 der Befestigungsplatte 68 schließen einen Winkel von 90° ein und bilden einen konvexen Bereich, an dessen Innenseite eine Leiste 96 mit Gewindebohrungen angeordnet ist. Schrauben 98 erstrecken sich jeweils durch eine Öffnung im vierten Bereich 76 einer ersten Befestigungsplatte 68, eine Öffnung 100 in einem Befestigungsbereich 90 einer Fingerleiste 92, eine Öffnung im zweiten Bereich 72 einer der ersten Befestigungsplatte 68 in Drehrichtung der Abscheidetrommel 64 unmittelbar nachfolgenden Befestigungsplatte 68' und in die Gewindebohrung der Leiste 96. Dadurch werden die Befestigungsplatten 68, 68' und die Fingerleiste 92 untereinander verbunden. Die an beiden Seiten des durch den zweiten Bereich 72 und dem fünften Bereich 78 gebildeten konvexen Bereich anliegende Leiste 96 stützt die Fingerleiste 92 und die beiden Bereiche 72, 78 an der Stützscheibe 64 ab und erhöht die Steifigkeit der Abscheidetrommel 28.

Weiterhin sind der dritte Bereich 74 einer ersten Befestigungsplatte 68 und der erste Bereich 70 der der ersten Befestigungsplatte 68 in Drehrichtung der Abscheidetrommel 64 unmittelbar nachfolgenden Befestigungsplatte 68' sowie der benachbarte Flanschbereich 82 durch eine Schraube 102 miteinander verbunden, die sich durch geeignete Öffnungen in den Bereichen 70, 74 und im Flanschbereich 82 erstreckt und mit einer Mutter 104 zusammenwirkt. Es sind jeweils alle Stützscheiben 64 mit den Schrauben 84 und 102 und den zugehörigen Muttern 86 und 104 verschraubt. Zwischen den Stützscheiben 64 sind weitere Schrauben 98 vorgesehen, wie die Figur 2 zeigt.

Wie man anhand der Figur 2 erkennt, ist der Mantel 66 der Abscheidetrommel 28 geschlossen. Die Finger 94 in Drehrichtung aufeinander folgender Fingerleisten 92 sind gegeneinander versetzt, so dass jeder Finger 94 genau die Lücke zwischen zwei Fingern 94 der vorhergehenden und der nachfolgenden Fingerleiste 92 verdeckt. Die Fingerleisten 92 sind sämtlich gleichartig hergestellt. Der Versatz wird durch eine abwechselnde, seitenverkehrte (um 180° gedrehte) Montage der Fingerleisten erzielt, da der Befestigungsbereich 90 sich nur an einer Seite der Fingerleisten 92 über den letzten Finger 94 über die Breite eines einzigen Fingers 94 hinaus erstreckt.

Der Befestigungsbereich 90 der Fingerleisten 92 weist dieselbe Stärke wie der Ernteguteingriffsbereich auf. Dadurch erreicht man, dass die Finger 94 im Überlastungsfall nach hinten umbiegen, ohne den Befestigungsbereich 90 oder den Mantel 66 der Abscheidetrommel 28 zu beschädigen.

Die erfindungsgemäße Abscheidetrommel 28 ist relativ einfach aufgebaut und kostengünstig herstellbar, da sich Schweißverbindungen zur Anbringung der Finger erübrigen. Die hohe Anzahl der Finger 94 ermöglicht ein effektives Zusammenwirken mit dem Erntegut, und die Abstützung durch die Leiste 96 stellt eine hinreichend stabile Anbringung der Befestigungsbereiche der Fingerleisten 92 sicher. Bei Aufprall eines Fremdkörpers werden die Finger 94 in der Regel nur nach hinten verbogen; jedoch bewirkt auch ein eventuell abbrechender Finger keine größeren Folgeschäden.

## Patentansprüche

1. Abscheidetrommel (28) für ein Mehrtrommeldreschwerk, umfassend eine Welle (62), einen mit der Welle (62) verbundenen Mantel (66) und mit dem Mantel (66) verbundene, sich vom Mantel (66) nach außen erstreckende Finger (94), die um den Umfang des Mantels (66) und über seine Länge verteilt sind, wobei um den Außenumfang des Mantels (66) mehrere Befestigungsplatten (68, 68') verteilt sind, zwischen benachbarten Befestigungsplatten (68, 68') jeweils ein sich nach außen ersteckender Spalt (88) verbleibt, in welchem eine sich in axialer Richtung des Mantels (66) erstreckende Fingerleiste (92) angeordnet ist, die mit beiden den jeweiligen Spalt (88) bildenden Befestigungsplatten (68, 68') verbunden ist und sich aus einem im Spalt (88) angeordneten Befestigungsbereich (90) und einem mehrere Finger (94) umfassenden Ernteguteingriffsbereich zusammensetzt, **dadurch gekennzeichnet, dass** die Befestigungsplatten (28) jeweils einen sich in Umfangsrichtung des Mantels (66) erstreckenden ersten Bereich (70), einen in Umfangsrichtung des Mantels (66) darauf folgenden, sich nach außen erstreckenden zweiten Bereich (72), einen in Umfangsrichtung des Mantels (66) darauf folgenden, sich in Umfangsrichtung des Mantels (66) erstreckenden dritten Bereich (74) und einen in Umfangsrichtung des Mantels (66) darauf folgenden, sich nach außen erstreckenden vierten Bereich (76) aufweisen, dass jeweils eine Fingerleiste (92) zwischen einem vierten Bereich (76) einer ersten Befestigungsplatte (68) und einem zweiten Bereich (72) einer zweiten, in Umfangsrichtung des Mantels (66) auf die erste Befestigungsplatte (68) folgenden, zweiten Befestigungsplatte (68') angeordnet ist, und dass der dritte Bereich (74) der ersten Befestigungsplatte (68) mit dem ersten Bereich (70) der zweiten Befestigungsplatte (68') verschraubt ist..

2. Abscheidetrommel (28) nach Anspruch 1, **dadurch gekennzeichnet, dass** ihrem Umfang benachbart ein Abscheidekorb (36) angeordnet ist.

3. Abscheidetrommel (28) nach Anspruch 1 oder 2, **dadurch gekennzeichnet, dass** sich die Fingerleiste (92) über die gesamte axiale Länge des Mantels (66) erstreckt.

4. Abscheidetrommel (28) nach einem der Ansprüche 1 bis 3, **dadurch gekennzeichnet, dass** die Finger (94) bei zwei in Umfangsrichtung des Mantels (66) direkt aufeinander folgenden Fingerleisten (92) in axialer Richtung gegeneinander versetzt angebracht sind.

5. Abscheidetrommel (28) nach Anspruch 4, **dadurch gekennzeichnet, dass** die aufeinander folgenden Fingerleisten (92) identisch und gegeneinander um 180° gedreht sind.

6. Abscheidetrommel (28) nach einem der Ansprüche 1 bis 5, **dadurch gekennzeichnet, dass** die Fingerleisten (92) entgegen der Drehrichtung nach hinten geneigt angeordnet sind.

7. Abscheidetrommel (28) nach einem der Ansprüche 1 bis 6, **dadurch gekennzeichnet, dass** die Schraubverbindung zwischen dem ersten Bereich (70) und dritten Bereich (74) zusätzlich eine mit der Welle (62) verbundene, sich radial erstreckende Stützscheibe (64) einschließt.

8. Abscheidetrommel (28) nach einem der Ansprüche 1 bis 7, **dadurch gekennzeichnet, dass** die Befestigungsplatten (68, 68') jeweils einen konvexen Bereich (72, 78) umfassen, an dessen Innenseite eine in ihrer Form an den konvexen Bereich (72, 78) angepasste, daran und gegebenenfalls an der Stützscheibe (64) anliegende Leiste (96) mit Gewindebohrungen angeordnet ist, in deren Gewindebohrungen Schrauben (98) eingreifen, die sich durch eine Öffnung in einer benachbarten Befestigungsplatte (68'), eine Öffnung (100) in der Fingerleiste (92) und eine Öffnung im konvexen Bereich (72, 78) der Befestigungsplatte (68) erstrecken und die Fingerleiste (92) mit beiden Befestigungsplatten (68, 68') verbinden.

9. Abscheidetrommel (28) nach einem der Ansprüche 1 bis 8, **dadurch gekennzeichnet, dass** der Befestigungsbereich (90) der Fingerleisten (92) dieselbe Stärke aufweist wie der Emteguteingriffsbereich.

10. Mehrtrommeldreschwerk mit einer Dreschtrommel (22) und einer Abscheidetrommel (28) nach einem der vorhergehenden Ansprüche.

11. Mähdrescher (10) mit einem Mehrtrommeldreschwerk nach Anspruch 10.

## Claims

1. Separating drum (28) for a multi-drum threshing mechanism, comprising a shaft (62), a shell (66) connected to the shaft (62) and fingers (94), which are connected to the shell (66), extend outwards from the shell (66) and are distributed around the circumference of the shell (66) and over the length of the latter, a plurality of fastening plates (68, 68') being distributed around the outer circumference of the shell (66), there remaining between adjacent fastening plates (68, 68') in each case an outward-extending gap (88) in which there is arranged a finger bar (92) which extends in an axial direction of the shell (66), is connected to both the fastening plates (68, 68') forming the respective gap (88) and is composed of a fastening region (90) arranged in the gap (88) and a crop engagement region comprising a plurality of fingers (94), **characterized in that** the fastening plates (68, 68') each have a first region (70), which extends in a circumferential direction of the shell (66), a second region (72), which follows on from the first region in a circumferential direction of the shell (66) and extends outwards, a third region (74) which follows on from the second region in a circumferential direction of the shell (66) and extends in a circumferential direction of the shell (66), and a fourth region (76), which follows on from the third region in a circumferential direction of the shell (66) and extends outwards, **in that** a finger bar (92) is in each case arranged between a fourth region (76) of a first fastening plate (68) and a second region (72) of a second fastening plate (68'), which follows on from the first fastening plate (68) in a circumferential direction of the shell (66), and **in that** the third region (74) of the first fastening plate (68) is bolted to the first region (70) of the second fastening plate (68').

2. Separating drum (28) according to Claim 1,
**characterized in that** a separating concave (36) is arranged adjacent to the circumference thereof.

3. Separating drum (28) according to Claim 1 or 2, **characterized in that** the finger bar (92) extends over the entire axial length of the shell (66).

4. Separating drum (28) according to one of Claims 1 to 3, **characterized in that**, in the case of two finger bars (92) following on from one another directly in a circumferential direction of the shell (66), the fingers (94) are attached in such a way as to be offset relative to one another in an axial direction.

5. Separating drum (28) according to Claim 4,
**characterized in that** the successive finger bars (92) are identical and turned through 180° relative to one another.

6. Separating drum (28) according to one of Claims 1 to 5, **characterized in that** the finger bars (92) are arranged sloping backwards counter to the direction of rotation.

7. Separating drum (28) according to one of Claims 1 to 6, **characterized in that** the bolted connection between the first region (70) and the third region (74) additionally includes a radially extending support disc (64) connected to the shaft (62).

8. Separating drum (28) according to one of Claims 1 to 7, **characterized in that** the fastening plates (68, 68') each have a convex region (72, 78), on the inside of which a bar (96) having threaded bores, which is matched in shape to the convex region (72, 78) and rests against the latter and, if appropriate, against the support disc (64), is arranged, in the threaded bores of which bar there engage bolts (98) which extend through an opening in an adjacent fastening plate (68'), an opening (100) in the finger bar (92) and an opening in the convex region (72, 78) of the fastening plate (68) and connect the finger bar (92) to both fastening plates (68, 68').

9. Separating drum (28) according to one of Claims 1 to 8, **characterized in that** the thickness of the fastening region (90) of the finger bars (92) is the same as that of the crop engagement region.

10. Multi-drum threshing mechanism with a threshing drum (22) and a separating drum (28) according to one of the preceding claims.

11. Combine harvester (10) having a multi-drum threshing mechanism according to Claim 10.

## Revendications

1. Tambour rotatif de séparation (28) pour une batteuse à plusieurs cylindres, comprenant un arbre (62), une enceinte (66) reliée à l'arbre (62) et des doigts (94) reliés à l'enceinte (66) et s'étendant vers l'extérieur à partir de l'enceinte (66), qui sont répartis sur le pourtour de l'enceinte (66) et sur sa longueur, dans lequel plusieurs plaques de fixation (68, 68') sont réparties autour du pourtour extérieur de l'enceinte (66), il subsiste chaque fois entre deux plaques de fixation voisines (68, 68') une fente (88) s'étendant vers l'extérieur, dans laquelle est disposée une barre de doigts (92) s'étendant dans la direction axiale de l'enceinte (66), qui est reliée aux deux plaques de fixation (68, 68') formant la fente respective (88) et se compose d'une zone de fixation (90) disposée dans la fente (88) et d'une zone de saisie de récoltes comprenant plusieurs doigts (94), **caractérisé en ce que** les plaques de fixation (68, 68') présentent chacune une première zone (70) s'étendant dans la direction périphérique de l'enceinte (66), une deuxième zone (72) succédant à celle-ci dans la direction périphérique de l'enceinte (66) et s'étendant vers l'extérieur, une troisième zone (74) succédant à celle-ci dans la direction périphérique de l'enceinte (66) et s'étendant vers l'extérieur et une quatrième zone (76) succédant à celle-ci dans la direction périphérique de l'enceinte (66) et s'étendant vers l'extérieur, **en ce qu'**une barre de doigts (92) est chaque fois disposée entre une quatrième zone (76) d'une première plaque de fixation (68) et une deuxième zone (72) d'une deuxième plaque de fixation (68') succédant à la première plaque de fixation (68) dans la direction périphérique de l'enceinte (66), et **en ce que** la troisième zone (74) de la première plaque de fixation (68) est assemblée par vissage à la première zone (70) de la deuxième plaque de fixation (68').

2. Tambour rotatif de séparation (28) selon la revendication 1, **caractérisé en ce qu'**un panier de séparation (36) est disposé à proximité de son pourtour.

3. Tambour rotatif de séparation (28) selon la revendication 1 ou 2, **caractérisé en ce que** la barre de doigts (92) s'étend sur toute la longueur axiale de l'enceinte (66).

4. Tambour rotatif de séparation (28) selon l'une quelconque des revendications 1 à 3, **caractérisé en ce que** les doigts (94) de deux barres de doigts (92) se succédant directement dans la direction périphérique de l'enceinte (66) sont décalés l'un par rapport à l'autre en direction axiale.

5. Tambour rotatif de séparation (28) selon la revendication 4, **caractérisé en ce que** les barres de doigts successives (92) sont identiques ou tournées de 180° l'une par rapport à l'autre.

6. Tambour rotatif de séparation (28) selon l'une quelconque des revendications 1 à 5, **caractérisé en ce que** les barres de doigts (92) sont disposées avec une inclinaison vers l'arrière dans le sens opposé au sens de rotation.

7. Tambour rotatif de séparation (28) selon l'une quelconque des revendications 1 à 6, **caractérisé en ce que** l'assemblage vissé entre la première zone (70) et la troisième zone (74) comprend en plus un disque de protection (64) s'étendant radialement et assemblé à l'arbre (62).

8. Tambour rotatif de séparation (28) selon l'une quelconque des revendications 1 à 7, **caractérisé en ce que** les plaques de fixation (68, 68') comportent chaque fois une zone convexe (72, 78), sur la face intérieure de laquelle est disposée une barre (96) avec des alésages filetés, adaptée à la forme de la zone convexe (72, 78) et appliquée sur celle-ci et éventuellement sur le disque de protection (64), dont les alésages filetés contiennent des vis (98) qui s'étendent à travers une ouverture dans une plaque de fixation voisine (68'), une ouverture (100) dans la barre de doigts (92) et une ouverture dans la zone convexe (72, 78) de la plaque de fixation (68), et qui assemblent la barre de doigts (92) aux deux plaques de fixation (68, 68').

9. Tambour rotatif de séparation (28) selon l'une quelconque des revendications 1 à 8, **caractérisé en ce que** la zone de fixation (90) des barres de doigts (92) présente la même épaisseur que la zone de saisie de récoltes.

10. Batteuse à plusieurs cylindres avec un batteur (22) et un tambour rotatif de séparation (28) selon l'une quelconque des revendications précédentes.

11. Moissonneuse-batteuse (10) avec une batteuse à plusieurs cylindres selon la revendication 10.
